(19) Europäisches Patentamt
European Patent Office
Office européen des brevets

(11) **EP 3 763 922 B1**

(12) **EUROPEAN PATENT SPECIFICATION**

(45) Date of publication and mention
of the grant of the patent:
**02.07.2025 Bulletin 2025/27**

(21) Application number: **19185211.0**

(22) Date of filing: **09.07.2019**

(51) International Patent Classification (IPC):
**F01N 3/021** *(2006.01)*   **F01N 3/28** *(2006.01)*

(52) Cooperative Patent Classification (CPC):
**F01N 3/0211; F01N 3/2853;** F01N 2310/02;
F01N 2350/02; F01N 2350/04; F01N 2450/02;
Y02T 10/12

(54) **MOUNTING MAT FOR USE IN POLLUTION CONTROL DEVICES**

MONTAGEUNTERLAGE ZUR VERWENDUNG IN
VERSCHMUTZUNGSKONTROLLVORRICHTUNGEN

MAT DE MONTAGE À UTILISER DANS DES DISPOSITIFS ANTIPOLLUTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**13.01.2021 Bulletin 2021/02**

(73) Proprietor: **3M Innovative Properties Company**
**Saint Paul, MN 55133-3427 (US)**

(72) Inventors:
• **Middendorf, Claus**
**41468 Neuss (DE)**
• **Schaschke, Martin**
**41453 Neuss (DE)**
• **Le Normand, Jean**
**78000 Versailles (FR)**

(74) Representative: **Mathys & Squire**
**Theatinerstraße 7**
**80333 München (DE)**

(56) References cited:
**EP-A1- 1 832 729      EP-A1- 2 848 720
WO-A1-2008/121801**

**Description**

## FIELD OF THE INVENTION

The present disclosure relates mounting mats for use in a pollution control device and to methods of making such mat and to pollution control devices containing such mats.

## BACKGROUND

Pollution control devices are employed to control atmospheric pollution of combustion engines. Such devices typically include a pollution control element. Pollution control elements typically contain catalytic converters or particle filters. For example, catalytic converters help to oxidize carbon monoxide and hydrocarbons or to reduce nitrogen oxides in exhaust gases. Particle filters remove soot or particles of exhaust gases from diesel and gasoline engines.

The pollution control element may be a monolithic structure or a plurality thereof and may be made of metal or ceramic material. Pollution control elements are often honeycombed structures. The pollution control devices further have a housing (typically made of steel) bearing the pollution control element.

WO 2008/121801 A1 describes fiber mat comprising inorganic fibers impregnated (e.g. by dipping or immersing the mat) with an organosilicon compound selected from the group consisting of siloxane compounds, alkoxy group-containing silanes, hydrolysates and condensates of these compounds, and combinations thereof. It is described that in a further configuration the fiber mat comprises a high friction coating on at least the side of the mat which is to be brought in contact with a pollution control element of a pollution control device.

EP 1 832 729 A1 - stating that it is a general object to provide a sheet member which has superior fabricating ability to be put on easily in a predetermined position without surface lubricants, and also to provide an exhaust gas purifying device having such a sheet member - describes a sheet member including inorganic fibers, in which sheet member a first surface and a second surface substantially facing away from each other are perpendicular to a direction of thickness of the sheet member; wherein the first surface has at least one lowest point and at least one highest point; and a maximum difference between the lowest and the highest point of the first surface (a maximum unevenness difference) h is $0.4\ \text{mm} \leqq h \leqq 9\ \text{mm}$.

Mounting mats are placed between the pollution control element and the housing of the pollution control device to avoid damage to the pollution control element and to compensate for the thermal expansion difference between pollution control element and housing and to prevent exhaust gases from passing between the monolith structures and the housing. Such mounting mats are known and commercially available. They are inserted into the pollution control device in a so-called "canning process". In this process the mounting mat is wrapped around the pollution control element first. Then the pollution control element with the mounting mat wrapped around it are pushed into the housing. The force that is necessary to push the pollution control element with the mounting mat wrapped around it into the housing is referred to in the art as "canning force".

Mounting mats have to be resilient at a full range of operating temperatures over a prolonged period of use. Therefore, they contain predominantly inorganic fibers. Organic binders are used to maintain resiliency and interior strength of the mats. Due to the resiliency of the mats, the canning force does not only depend on friction but also on the compression of the mat.

Efforts have been made to reduce the canning force. In European Patent EP 2 848 720 B1 certain lubricants have been applied to the mat to reduce cold peak compression of the mat and thus reduce the canning force. The lubricants are reported to be used in amounts of at least 0.5 % by weight because lower amounts did not have any impact on the cold peak impression. The lubricants are sprayed onto the fibers during mat making to ensure distribution of the lubricants throughout the entire thickness of the mat.

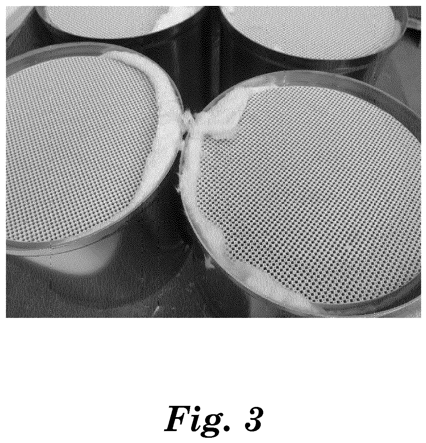

Typically, the friction between mat and housing is lower than the friction between mat and pollution control element. This is because the interior surface of the housing facing the mat is typically made of steel and has a very smooth surface, while the pollution control element is a porous structure with a comparatively rough structure. It has been found that the interior strength of thick, predominantly polycrystalline mats with low amounts of organic binder, i. e. with low amount of organic content have reduced resistance to the shear forces in the canning process. Despite lower friction between mat surface and housing it has been found that sections of the mat facing the housing get separated and are pushed out of its place between pollution control element and housing during the canning process. This result of a canning process with mats not according to the invention is shown in Figure 3. When mat material gets pushed out of its place between housing and pollution control device it may have lost its sealing function.

Surprisingly it has been found that certain organic materials when applied in low amounts to thick polycrystalline mounting mats with low organic content surprisingly reduce the canning force despite having no effect on reducing frictional forces or cold peak compression.

## SUMMARY

In one aspect there is provided a mounting mat for mounting a pollution control element into a housing wherein the mounting mat is needle-punched or stitch-bonded and has a thickness of from about 8.0 mm to 15.0 mm, preferably from 8.8 mm to 15.0 mm, more preferably from 10.0 mm to 15.0 mm and a bulk density from 150 kg/m$^3$ to 180 kg/m$^3$ and contains at least 75 % by weight of polycrystalline fibers, preferably at least 85 % by weight based on the weight of the mat and has a total organic content of less than 2.9 % as measured per LOI, preferably from 0.6 % to 2.6 %. The mat contains at its surface that is or that will be exposed to the housing one or more organic surface additives selected from organic solids having a melting point above 25 °C and less than 70 °C and organic oils having a kinematic viscosity at 40 °C of between 4 mm$^2$/s and 145 mm$^2$/s, preferably between 4.5 mm$^2$/s and 24 mm$^2$/s, as measured in accordance with ASTM D445, wherein the total amount of the one or more organic surface additive in the mat is from 0.01 to 0.44 % by weight based on the weight of the mat. The mat has a canning force (Fc) of less than 5700 N, preferably less than 4500 N, for example from 3000 to 4500 N as measured according to test method defined in the section "Canning Force" *infra.*

In another aspect there is provided a pollution control device containing at least one of the above-described mounting mats.

In a further aspect there is provided a method of assembling a pollution control device comprising

(i) providing the above-described mat;
(ii) wrapping the mat around a pollution control element; and
(iii) Inserting the mat with the pollution control element into the housing of a pollution control device.

In yet another aspect there is provided a method of making the above-described mat comprising

(i) providing a mounting mat that is needle-punched or stitch-bonded and has a thickness of from about 8.0 mm to 15.0 mm, preferably from 8.8 mm to 15.0 mm, more preferably from 10.0 mm to 15.0 mm and a bulk density from 150 kg/m$^3$ to 180 kg/m$^3$ and contains at least by 75 % by weight of polycrystalline fibers, preferably at least 85 % by weight based on the weight of the mat and has a total organic content of less than 2.5 % as measured per LOI, preferably from 0.5 % to 2.1 %, wherein the mat has a canning force (Fc) of greater than 5700 N as measured according to test test method defined in the section "Canning Force" *infra*; and subsequently

(ii) applying one or more organic surface additive to the surface of the mat that will be exposed to the housing of the pollution control device, wherein the organic surface additive is applied in amounts such that the total content of organic surface additive is from 0.01 % to 0.44 % by weight based on the weight of the mat, wherein the organic surface additive is as defined *supra* and wherein after said applying one or more organic surface additive to the surface of the mat, the mat has a canning force (Fc) as measured according to the test method defined in the section "Canning Force" *infra* of less than 5700 N.

## BRIEF DESCRIPTION OF FIGURES

FIGURE 1 is a schematic representation of a mounting mat for mounting one or more pollution control elements into the housing of a pollution control device according to the invention.

FIGURE 2 is a cross-sectional schematic illustrating of a pollution control device according to the present invention with a mounting mat placed between housing and pollution control element.

FIGURE 3 is a photograph of pollution control devices after a canning process with mats that are not according to the invention. The mats between the metal housing and the honeycombed pollution control device got damaged during the canning process because parts of the mats extend beyond pollution control device and housing.

## DETAILED DESCRIPTION OF THE INVENTION

It is to be understood that the disclosure is not limited in its application to the details of construction and the arrangement of components set forth in the following description. The use of "a" or "an" is meant to encompass "one or more". Any numerical range recited herein is intended to include all values from the lower value to the upper value of that range. For example, a concentration range of from 1 % to 50 % is intended to be an abbreviation and to expressly disclose the values between the 1 % and 50 %, such as, for example, 2 %, 40 %, 10 %, 30 %, 1.5 %, 3.9 % and so forth.

The total amount of ingredients of a composition is 100 % by weight unless specified otherwise. Therefore, if the concentration of special ingredients of a composition is given by weight percentages ("weight %", "% by weight" or "wt %") the total amount of all ingredients of that composition will be selected to add up to 100 % by weight.

Mounting mats

The mounting mats according to the present disclosure are comparatively thick and contain low amounts of organic materials. The mats according to the present invention are easy to handle during the assembly of pollution control devices, in particular during canning because they require a canning force of less than 5700 N in the canning process, for example a canning force between 3000 N and 5500 N.

A mounting mat suitable for use in the invention contains one or more non-woven fabric made exclusively or predominantly from polycrystalline fibers. "Predominantly" as used herein means the content of polycrystalline fibers is at least 75 % by weight based on the total weight of the mat, preferably at least 85 % by weight, more preferably at least 90 % by weight and most preferably at least 95 % by weight (based on the weight of the mat). Polycrystalline fibers are fibers that contain at least 50 % by weight based on the weight of the fibers of $Al_2O_3$, preferably at least 70 % by weight and may or may not contain other oxides, for example $SiO_2$.

The mounting mat may include other fibers in amounts of less than 25 % by weight based on the weight of the mat, preferably less than 15 % by weight, more preferably less than 10 % by weight or less than 5 % even 0 % by weight based on the weight of the mat. Preferably, the mat according to the present disclosure contains at least 95 % by weight preferably at least 97 % by weight of fibers (weight percentages are based on the weight of the mat).

The mounting mat according to the present invention may have a $SiO_2$ content, typically as a component of fibers, of from about 0.5 to 35 % by weight, for example from about 6 % to about 25 % by weight of $SiO_2$ (based on the weight of the mat).

The fibers of the mounting mat typically have a diameter of from about 3 $\mu$m to 10 $\mu$m, preferably between 5 $\mu$m and 8 $\mu$m. Preferably the average diameter (median or D50) is between 5 $\mu$m and 7 $\mu$m. The average particle diameter can be measured by electron microscopy and can be calculated from at least 100 fibers.

A mounting mat of the present invention has a bulk density from 150 kg/m$^3$ to 180 kg/m$^3$, preferably from 160 kg/m$^3$ to 180 kg/m$^3$.

Preferably the mounting mat according to the present invention has an area weight (also referred to as "grammage" or "area density") of from about 1400 to 2500 g/m$^2$.

The mounting mat according to the present invention has a length, a width and a thickness (all orthogonal to each other) and the thickness being the smallest dimension. The mounting mat has a thickness of from 8.0 mm to 15.0 mm, preferably from 8.8 mm to 15.0 mm, more preferably from 10.0 mm to 15.0 mm. The thickness typically is from 8.0 mm to 15.0 mm, or from 9.0 to 12.5 mm.

In one embodiment of the present invention the mat has an area weight from 1500 g/m$^2$ to 1800 g/m$^2$ and a thickness from 8.0 mm to 12.4 mm. In another embodiment of the present invention the mat has an area weight from 1800 to 2400 g/m$^2$ and a thickness from 8.8 mm to 15.0 mm.

The mat is preferably kept in its compressed form and thickness by needle-punching or stitch-bonding, i. e. the mat is needle-punched or stitch-bonded.

The mat for use in the present invention may further contain additives or other ingredients that are typically used in mounting mats for mounting pollution control elements into housings of pollution control devices. However, the mat according to the present invention may contain no or only low amount of organic binders and has a very low organic content.

The mat has a total organic content of less than 2.9 % as measured per LOI, preferably from 0.6 % to 2.6 %. For example, the amount of organic binders may include amounts of from 0 % by weight to 2.5 % or from 0.5 % to 2.0 % by weight (based on the total weight of the mat). Organic binder typically are polymers capable of binding the fibers together, for example upon heat activation, for example by polymerization, cross-linking etc. or by having adhesive properties. Examples of organic binders include but are not limited to polymers or copolymers of acrylates, methacrylates, styrenes, butadienes, vinyl pyridines, acrylonitriles, vinyl chlorides, vinyl acetates, vinyl alcohols, ethylenes, polyurethanes, polyamides, silicones, polyesters, epoxy resins and combinations thereof.

Inorganic fillers

The mat for use in the invention may or may not contain inorganic materials other than fibers. Typical inorganic materials used in mounting mats for pollution control devices include alumina particles, silica particles and intumescent materials. As used herein, "intumescent material" means an inorganic material that expands, foams, or swells when exposed to a sufficient amount of thermal energy. Intumescent materials include vermiculites and graphites. However, preferably the mat according to the invention does not contain any intumescent material, or contains only low amounts of intumescent materials, for example in amounts of from 0 to less than 5 % by weight (based on the weight of the mat). The mat may or may not contain inorganic fillers, for example clays or metal oxides. Typical amounts include amounts from 0 to 5 % by weight (based on the weight of the mat).

Organic surface additives

The mats according to the present invention contain very low amounts of one or more organic surface additives. Preferably, the mat contains all or the majority of the organic surface additives on the surface that will be exposed to the housing. Suitable organic surface additives are organic compounds being either organic solids having a melting point above 25 °C and less than 70 °C, preferably above 30 °C and less than 45 °C or organic oils with a kinematic viscosity at 40 °C of between 4 and 145 $mm^2$/s, preferably between 4.5 and 45 $mm^2$/s, for example between and including 4.5 and 24 $mm^2$/s (measured in accordance with ASTM D445), or both.

The total amount of organic surface additive(s) in the mat is from 0.01 to 0.44 % by weight based on the weight of the mat. Favorably , the surface additives are used in amounts that do not show a statistically significant reduction of the compression (cold peak compression) of the mat. The mats according to the present invention contain preferably less than 0.2 % by weight of organic surface additives. Although such additives may not have a measurable effect on reducing the compression or friction in the canning process in the concentrations they are used and appear not to act as lubricants, they may be selected from the class of known lubricants and they may act as lubricants and show reduction of either friction or compression when used in higher concentrations, for example in amounts of at least 0.5 % by weight (based on the weight of the mat).

Several different organic surface additives may be used or only the same surface organic additive may be used. The mat contains the one or more surface additive in a total amount of from 0.01 % by weight to 0.44 % by weight, preferably from 0.02 % by weight or 0.05 % by weight up to 0.3 % by weight (based on the weight of the mat).

The surface additives may not have to be evenly distributed across the entire thickness of the mat to show a reduction of the canning force. Preferably, the surface additives according to the invention are contained mainly or exclusively on the surface of the mounting mat that is exposed or will be exposed to the housing. Therefore, the surface additives may be distributed unevenly across the thickness of the mat and the majority of the additives may be found within a distance from 0 mm to 2 mm across the thickness of the mat when measured from the surface facing or meant to be facing the housing of the pollution control device. The surface of the mat facing or meant to be facing the pollution control element may in fact contain less than 0.01 % or 0 % by weight (based on the weight of the mat) of any surface additives. Therefore, it is not necessary to treat the fibers of the mat with the surface additive when producing the mats. It is sufficient and preferred to treat the finished mat with the surface additive and preferably to treat only the surface of the finished mat that will be exposed to the housing with the surface additive.

Suitable organic surface additives include waxes (e. g. polypropylene waxes) and organic oils. Examples of suitable organic surface additives include hydrocarbons and functional hydrocarbons, i. e. hydrocarbons containing one or more functional groups, and silicone oils. The hydrocarbons and functional hydrocarbons may contain from 10 to 40 carbon atoms and preferably are saturated, aliphatic hydrocarbons.

Hydrocarbons include cyclic, linear and branched hydrocarbons, preferably aliphatic hydrocarbons and saturated hydrocarbons and include mineral oils. Hydrocarbons also include unsaturated, preferably olefinically unsaturated hydrocarbons and include cyclic alkenes or alkines.

Functional hydrocarbons may contain from 10 to 40 carbon atoms and contain at least one functional group selected from hydroxy groups, carboxylic acid ester groups, anhydride groups and combinations thereof. Preferred functional groups are ester groups. Specific examples of functional hydrocarbons include fatty alcohols, fatty acid esters. Particular examples include diester or polyester oils, for example ester, diester or polyester of carboxylic acids with mono- or polyhydric alcohols, esters of fatty acids or fatty alcohols including triglycerides.

Suitable esters are described, for example, in European patents EP 0 374 671, EP 0 374 672, EP 0 386 638, EP 0 386, 636 and EP 535 074 and EP 0 532 570.

The lubricants according to the invention are preferably sprayed onto the mat. However, other methods of applying liquids to a surface may be applied as well.

Method of making mounting mats

The mounting mats according to the invention may be made by any known process for making mounting mats for mounting pollution control elements. Possible processes include dry-laid processes and wet-laid processes. For a dry-laid process a conventional web forming machine such as those commercially available from Rando Machine Corp. (Macedon, NY) under the trade designation "RANDO WEBBER" or from Scan web Co. (Denmark) under the trade designation "DAN WEB" may be used. An embodiment of the dry-laid process is described, for example, in EP 2 848 720 B1.

The wet-laid process for making mats is similar to the known process of making paper from pulp. A web is formed from a slurry containing fibers and additives, typically the slurry is an aqueous slurry. The slurry is then dehydrated by feeding the slurry through one or more meshes. The remaining dehydrated material is compressed and subjected to one or more heat treatments. The mat is compressed to the desired thickness and kept in the compressed form at the desired thickness for example by using heat-activated binder materials, or by mechanical means like stitch-bonding or needle-punching or a combination thereof. As alternative, or in addition to adding binder or additives during the mat making process, for example by adding them to the fiber slurry, binder or additives may be added to the finished mat by spraying them onto the mat or by impregnating the mats with liquid additives or binders.

In one aspect there is provided a method of making a mounting mat according to the invention comprising (i) providing a mounting mat for mounting a pollution control element into a housing that is needle-punched or stitch-bonded and has a thickness of from about 8.0 mm to 15.0 mm, preferably from 8.8 mm to 15.0 mm, more preferably from 10.0 mm to 15.0 mm and a bulk density from 150 kg/m$^3$ to 180 kg/m$^3$ and contains at least by 75 % by weight of polycrystalline fibers, preferably at least 85 % by weight based on the weight of the mat and has a total organic content of less than 2.5 % as measured per LOI, preferably from 0.2 % to 2.2 %, wherein the mat has a canning force (Fc) of greater than 5700 N (as measured according to test method defined in the section "Canning Force" *infra*; and subsequently (ii) applying one or more organic surface additive to the surface of the mat that will be exposed to the housing of the pollution control device, wherein the organic surface additive is applied in amounts such that the total content of organic surface additive is from 0.01 to 0.44 % by weight based on the weight of the mat, wherein the organic surface additive is as defined *supra* and wherein after said applying one or more organic surface additive to the surface of the mat, the mat has a canning force (Fc) as measured according to the test method defined in the section "Canning Force" *infra* of less than 5700 N

Pollution control devices

In one aspect the present invention also provides a housing containing the mounting mat and a pollution control element. The housing may be part of a pollution control device or the combination and assembly of pollution control element, mounting mat and housing may form a pollution control device. The mounting mat according to the invention can be placed between the pollution control element and the housing when mounting the pollution control element into the housing, for example during the assembly of the pollution control device.

A pollution control element or exhaust gas after treatment element according to the invention may be any kind of device that is used to reduce the amount of unwanted ingredients in exhaust gases of, for example, vehicles or industrial machines. Typical examples of pollution control elements are catalytic converters or diesel particulate filters. Catalytic converters typically contain a ceramic monolithic structure having walls that support the catalyst or a plurality of monolithic structures. The catalyst typically oxidizes carbon monoxide and hydrocarbons or reduces the oxides of nitrogen in the engine exhaust gases to control atmospheric pollution. The monolithic structures may be made of metal or of a ceramic material and may be porous and/or honeycomb-structured. The devices typically have a housing (typically made of stainless steel). The mounting mat according to the invention is placed between the pollution control element and the housing and may hold the pollution control element in place or may help to hold the pollution control element in place.

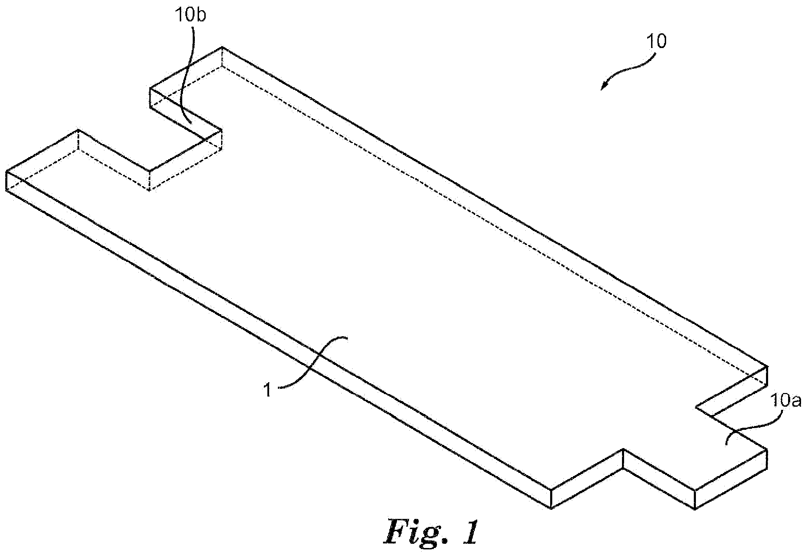

A schematic representation of a mounting mat of the invention is shown in FIGURE 1. The mounting member 10 illustrated in this figure may be wrapped around a pollution control element. The mounting member 10 has a length that is in accordance with the length of the outer circumference of the pollution control element. The mounting member 10 has a convex part 10a and a concave part 10b on the opposite end and has a shape such that the convex part 10a and the concave part 10b mutually engage when the mounting member 10 is wrapped around the pollution control element. The shape for the mating is not restricted to the shape illustrated in Figure 1 and any shape that can effectively prevent leaking of the exhaust gas in the mating region may be used. Such other shapes include, but are not limited to, L-shapes. The mounting member 10 has a width that is in accordance with the length of the pollution control element.

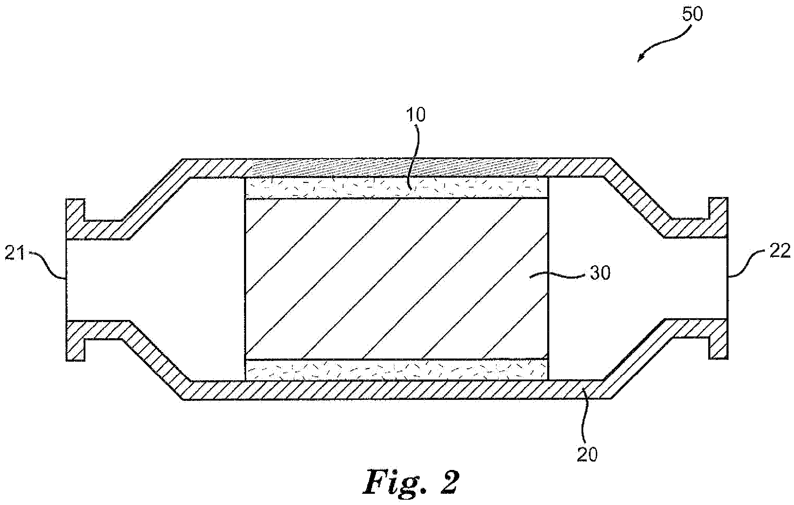

FIGURE 2 illustrates an embodiment of a pollution control device. The pollution control device 50 illustrated in Figure 2 has a casing 20, a pollution control element 30 provided in the casing 20, and the mounting member 10 of Figure 1 provided between the inner surface of the casing 20 and the outer surface of the pollution control element 30. The mounting mat 10 holds the pollution control element 30 in place in the casing and seals the gap between the pollution control element 30 and the casing 20. The pollution control device 50 has a gas intake port 21 and a gas discharge port 22. The mounting member 10 is in an appropriately compressed condition between the casing 20 and the pollution control element 30. By using the mounting member 10 according to the invention to retain the pollution control element 30, a sufficiently high surface pressure can be maintained between the inner surface of the casing 20 and the pollution control element 30.

Pollution control devices are assembled by wrapping the mat around the substrate and inserting both into a housing. The housing forms part of the pollution control device. In case of thick polycrystalline mats with low amount of organic content "overstuffing" may occur, which is shown in FIGURE 3. When the canning force is too high, mat splits apart and the exterior part of the mat facing the housing gets pushed out of the housing. This phenomenon is observed for thick polycrystalline mats with low organic content, while it is typically not observed for thinner polycrystalline mats or polycrystalline mats with higher amounts of organic binder, i. e. higher amounts of organic content. Mats with a higher amount of organic binder and thus a higher organic content better withstand the shear forces during the canning process. However, increasing the binder content to increase the shear resistance of the mats may be undesired because if organic binders within fiber mats are not sufficiently decomposed and dissipated they can provide unpleasant smell for a long time. Furthermore, organic binders can cause on-board-diagnostic (OBD) sensor issues during the first uses of a new pollution control device. The OBD sensor will give a signal showing that the pollution control device does not work properly. An example of an OBD would be a "Lambda Sensor".

Therefore, in one aspect there is provided a process of assembling a pollution control device comprising (i) providing a mat according to the invention, (ii) wrapping the mat around a pollution control element; (iii) inserting the mat with the pollution control element into the housing of a pollution control device.

## EXAMPLES

The present invention is illustrated in greater detail in the following examples. These examples are merely for illustrative purposes. It is not intended to limit the invention to the specific embodiments illustrated in these examples.

### Test methods

Thickness

The thickness of the mats was determined according to ISO 10635:1999(E), (dial gauge comparator method).

Bulk density

The bulk density was determined according to ISO 10635:1999(E).

Total organic content (Loss on Ignition; LOI)

The total content of organic material of a mat is determined by the loss on ignition method. A sample of amounting mat having a dimension of 50 mm × 50 mm (length x width) was dried at 110 °C for 2 hours using a hot air oven ULP 500 from Memmert GmbH & Co. KG. The sample was then allowed to cool to room temperature (23±2 °C.) in a desiccator under dry conditions (e. g. using silica gel or a molecular sieve). After weighing the sample, the sample was heated ("fired") to 600 °C for 2 hours using e. g. a muffle furnace LH 120/14 from Nabertherm, then allowed to cool to room temperature in a desiccator under dry conditions and weighed again.

The weight loss, i. e., the difference in weight before and after heating to 600 °C is generally considered as LOI of a fiber mat, presuming that under these conditions essentially the whole content of organic material decomposes and dissipates.

The LOI in % is calculated as follows:

$$ LOI\ (in\ \%) = \frac{weight\ before\ firing\ (in\ g)\ -\ weight\ after\ firing\ (in\ g)}{weight\ before\ firing\ (in\ g)} \times 100 $$

Friction

A material tester (Zwick/Roell Model Z010 from Zwick GmbH & Co KG, Ulm, Germany) was used to measure the friction in a canning process. The vertical axis of the test machine was equipped with a lower fixed stainless steel anvil and a load cell capable of measuring forces up to 10 kN, and an upper stainless steel anvil mounted to the movable crosshead of the test machine. Before each test both anvils were covered by a new, degreased ferritic stainless steel plate, type 409, of 1 mm thickness in order to perform the friction on a defined and reproduceable surface. A second horizontal axis equipped with a 1 kN load cell was used to pull out the sample while the mat was in a compressed state.

The fiber mat test samples were die cut to a size of 50 mm length × 40 mm width. Next, the surface of a sample opposite the surface to be tested was attached by a double-sided adhesive tape to a sheet of steel with a dimension of 150 mm length × 50 mm width. The two test specimens were positioned close to one end at exactly the same position on both sides of the sheet of steel.

The so prepared three-layer-sandwich construction (mat/metal sheet /mat) was placed between the anvils of the test machine. The other end of the metal sheet was attached to the horizontal axis so that the longitudinal axis of the sheet coincided with the horizontal pull axis. Two identical mat types facing the metal sheet with the same side were used to determine the frictional force.

The upper plate was moved downwards onto the sample until a normal force of 500 N was reached. The force was held constant over the complete test time. After 10 min relaxed time the horizontal axis pulled with a speed of 50 mm/min the compressed samples over the steel anvil surfaces. The pulling force was measured with a 1 kN load cell over the full distance of about 20 mm.

The coefficient of static friction $\mu$ is calculated from the maximum pull force $F_{pull}$ divided by the normal force $F_N$ exerted between the two surfaces according to formula:

$$\mu = F_{pull} / F_N \times 1/2$$

Compression (Cold Peak Compression; P0)

A static compression test was conducted at ambient conditions on the mats prepared in the examples to determine their resistance to compression. The test equipment comprised two anvils that could be advanced toward one another, thus compressing a mat sample that had been placed between them.

For the specific tests in these examples a material test machine from Zwick/Roell Model Z010 from Zwick Gmbh & Co KG, Ulm, Germany was utilized. The device was fitted with a 10kN load cell to measure the resistance of the sample mat to compression and with a height measuring device for measuring the thickness of the sample at various stages of compression.

Samples were prepared by taking circular die-cuts with a diameter of 50.8 mm from the mounting mat. Three samples were taken at equally spaced intervals across the width of the mat at least 25 mm from the edge. The test was conducted by the following procedure. Each sample was first weighed. Then the weight per area of each sample was calculated by dividing the weight of the sample by the surface area of the sample (calculated from the known diameter of 50.8 mm) and was recorded in $g/mm^2$. The gap between the anvils that was necessary to reach a final compressed density of 0.40 g/cm was then calculated. This is the desired density where the resistance to compression is to be measured.

Example calculation:

$$\text{Gap size in cm} = \frac{\text{Weight per area in g/cm2}}{\text{Initial Density in g/cm}}$$

Thus a sample with the weight per area of 2200 $g/m^2$ and an initial density of ca. 0.40 $g/cm^3$, would need to be compressed to a thickness of 0.55 cm (5.5 mm) to obtain a final density of 0.40 $g/cm^3$. The sample was then placed on the lower anvil of the test equipment. The gap between the anvils was then closed at a rate of 25.4 mm per minute, starting from 20 mm distance between the anvils. The advancement of the anvils was then stopped at the gap between the anvils that was calculated above.

The maximum force of the entire test is considered as Cold Peak Compression P0.

Canning Force

Fiber mats were wound lengthwise around the external surface of a cylindrical ceramic (cordierite) substrate body which had a 132 mm diameter and a length of 128 mm. The mats were cut to a size such that they can be wrapped around once over the entire circumference of the substrate body and over the entire length of the substrate body. The substrate with the fiber mat wrapped around it was stuffed into a cylindrical steel casing having a diameter of greater than the combined diameter of substrate body with the mat wrapped around it. For example for mats with a thickness of about 10.8 mm the casing had a diameter of about 144 mm. The steel casing had a length of 230 mm. Mat and substrate body were pushed into the casing by using a guide cone at a rate of 500 mm/sec. The inner surface of the steel casing was visibly smooth and the wall thickness of the casing was about 5 mm. The diameter of the steel casing was calibrated for each canning such that the gap bulk density (GBD) of the mat between the substrate body and the casing was kept at 0.40 $g/cm^3$. This was done by pressing the steel casing together and reducing its diameter until the gap between housing and substrate has reached the distance at which the mat is compressed to a calculated bulk density of 0.40 $g/cm^3$ taking into account the area weight of the mat. During the above canning process, i. e. when the entire substrate had been inserted into the casing the force required to achieve the insertion was measured. The canning force is the maximum force that was recorded during this process.

## EXAMPLES

Example 1

A polycrystalline, needle-punched mounting mat with a thickness of 12.5 mm +/2.0 mm was provided. The mat had an organic binder content (LOI) of below 2 % wt and had a total organic content (LOI) below 2 %. The mat contained more than 75 % by weight of polycrystalline fibers (average fiber diameter 5-7 $\mu$m, $Al_2O_3$, content >70 %) and had an area weight of 2200 g/m$^2$. A surface additive was sprayed on the surface of the mat that would be facing the housing in a canning process by using a spray pump. The amount of surface additive applied to the mat was such that the mat contained 0.05 % by weight based on the weight of the mat of the surface additive. The surface additive was an organic oil having a kinematic viscosity of 6.3 mm$^2$/s at 40 °C. Four samples were prepared this way and tested for compression, friction and canning force. The averaged results are shown in table 1.

Example 2

Example 1 was repeated with the surface additive but in an amount of 0.2 % by weight based on the weight of the mat.

Example 3

Example 1 was repeated except that the surface additive was used in an amount of 0.3 % by weight based on the weight of the mat.

Comparative Example 1

Example 1 was repeated except that no surface additive was used. The samples were measured for their compression and friction value and for the canning force.

*Table 1:*

|  | Compression, P0 (kPa) | Friction, $\mu$ (N) | Canning Force, Fc (N) |
|---|---|---|---|
| Example 1 |  |  | 3969 +/- 57 |
| Example 2 |  |  | 4048 +/- 265 |
| Example 3 | 414 +/-25 | 0.185 +/- 0.004 | 3643 +/- 155 |
| Comparative Example 1 | 406 +/- 36 | 0.181 +/- 0.03 | 6196 +/-213 |

## Claims

1. Mounting mat for mounting a pollution control element into a housing,

   wherein the mounting mat is needle-punched or stitch-bonded and has a thickness of from 8.0 mm to 15.0 mm, preferably from 8.8 mm to 15.0 mm, more preferably from 10.0 mm to 15.0 mm and a bulk density from 150 kg/m$^3$ to 180 kg/m$^3$ and contains at least by 75 % by weight of polycrystalline fibers, preferably at least 85 % by weight, based on the weight of the mat,
   wherein the mat has a total organic content of less than 2.9 % as measured per LOI, preferably from 0.6 % to 2.6 %,
   **characterized in that**
   the mat contains at its surface that is or that will be exposed to the housing one or more organic surface additives selected from organic solids having a melting point above 25 °C and less than 70 °C and organic oils having a kinematic viscosity at 40 °C of between 4 mm$^2$/s and 145 mm$^2$/s, preferably between 4.5 mm$^2$/s and 24 mm$^2$/s, as measured in accordance with ASTM D445, wherein the total amount of the one or more organic surface additive in the mat is from 0.01 to 0.44 % by weight based on the weight of the mat;

and **in that**
the mat has a canning force (Fc) as measured according to the test method defined in the section "Canning Force" of the description of less than 5700 N.

2. The mounting mat of claim 1, wherein the mat has a canning force (Fc) as measured according to the test method defined in the section "Canning Force" of the description of less than 4500 N, for example from 3000 to 4500 N.

3. The mounting mat of any one of the preceding claims wherein the one or more organic surface additive includes an aliphatic hydrocarbon having from 10 to 40 carbon atoms or an aliphatic functionalized hydrocarbon having from 10 to 40 carbon atoms and wherein the functionalized hydrocarbon has one or more functional groups selected from hydroxy groups, carboxylic acid ester groups, ketone groups, oxygen-ether groups and combinations thereof.

4. The mounting mat of any one of the preceding claims wherein the one or more organic surface additive includes a fatty acid alcohol, a fatty acid ester or a combination thereof.

5. The mounting mat of any one of the preceding claims wherein the one or more organic surface additive includes a silicone oil.

6. The mounting mat of any one of the preceding claims wherein the mat contains no organic surface additive at its surface that is or will be exposed to the surface of the pollution control element.

7. The mounting mat according to any one of the preceding claims containing at least 95 % by weight based on the total weight of the mat of fibers.

8. The mounting mat according to any one of the preceding claims wherein the polycrystalline fibers contain at least 50 % by weight of $Al_2O_3$, preferably at least 65 % by weight of $Al_2O_3$ based on the weight of the fibers.

9. The mounting mat according to any one of the preceding claims comprising from 0.5 % to 35 % by weight of $SiO_2$ based on the weight of the mat.

10. The mounting mat according to any one of the preceding claims wherein the mat contains no or less than 5 % by weight of vermiculite, graphite or a combination thereof.

11. A pollution control device containing at least one mounting mat according to any one of claims 1 to 10.

12. Method of assembling a pollution control device comprising

(i) providing a mat according to any one of claims 1 to 10,
(ii) wrapping the mat around a pollution control element;
(iii) inserting the mat with the pollution control element into a housing wherein the housing is a part of a pollution control device.

13. Method of making a mat according to any one claims 1 to 10, comprising

(i) providing a mounting mat that is needle-punched or stitch-bonded and has a thickness of from 8.0 mm to 15.0 mm, preferably from 8.8 mm to 15.0 mm, more preferably from 10.0 mm to 15.0 mm and a bulk density from 150 kg/m$^3$ to 180 kg/m$^3$ and contains at least by 75 % by weight of polycrystalline fibers, preferably at least 85 % by weight based on the weight of the mat and has a total organic content of less than 2.5 % as measured per LOI, preferably from 0.5 % to 2.1 %, wherein the mat has a canning force (Fc) as measured according to the test method defined in the section "Canning Force" of the description of greater than 5700 N; and subsequently
(ii) applying one or more organic surface additive to the surface of the mat which will be exposed to the housing of the pollution control device, wherein the organic surface additive is applied in amounts such that the total content of organic surface additive is from 0.01 % to 0.44 % by weight based on the weight of the mat, wherein the organic surface additive is as defined in any one of claims 1 to 5 and wherein after said applying one or more organic surface additive to the surface of the mat, the mat has a canning force (Fc) as measured according to the test method defined in the section "Canning Force" of the description of less than 5700 N.

14. The method of claim 13 wherein the organic surface additive is applied to the surface by spraying.

**Patentansprüche**

1. Einbaumatte zum Einbauen eines Emissionsminderungselements in ein Gehäuse,

   wobei die Einbaumatte genadelt oder nähgewirkt ist und eine Dicke von 8,0 mm bis 15,0 mm, vorzugsweise von 8,8 mm bis 15,0 mm, mehr bevorzugt von 10,0 mm bis 15,0 mm und eine Rohdichte von 150 kg/m$^3$ bis 180 kg/m$^3$ aufweist und zu mindestens 75 Gew.-% polykristalline Fasern, vorzugsweise zu mindestens 85 Gew.-%, bezogen auf das Gewicht der Matte, enthält,
   wobei die Matte einen organischen Gesamtgehalt von weniger als 2,9 %, gemessen nach LOI, vorzugsweise von 0,6 % bis 2,6 %, aufweist,
   **dadurch gekennzeichnet, dass**
   die Matte an ihrer Oberfläche, die dem Gehäuse ausgesetzt ist oder sein wird, einen oder mehrere organische Oberflächenadditive enthält, ausgewählt aus organischen Feststoffen, die einen Schmelzpunkt über 25 °C und unter 70 °C aufweisen, und organischen Ölen, die eine kinematische Viskosität bei 40 °C zwischen 4 mm$^2$/s und 145 mm$^2$/s, vorzugsweise zwischen 4,5 mm$^2$/s und 24 mm$^2$/s, gemessen gemäß ASTM D445, aufweisen, wobei die Gesamtmenge des einen oder der mehreren organischen Oberflächenadditive in der Matte von zu 0,01 bis 0,44 Gew.-% beträgt, bezogen auf das Gewicht der Matte;
   und **dadurch gekennzeichnet, dass**
   die Matte eine Einbettungskraft (Fc), gemessen nach dem in dem Abschnitt "Einbettungskraft" der Beschreibung definierten Prüfverfahren, von weniger als 5700 N aufweist.

2. Die Einbaumatte nach Anspruch 1, wobei die Matte eine Einbettungskraft (Fc), gemessen nach dem in dem Abschnitt "Einbettungskraft" der Beschreibung definierten Prüfverfahren, von weniger als 4500 N, beispielsweise von 3000 bis 4500 N aufweist.

3. Die Einbaumatte nach einem der vorstehenden Ansprüche, wobei das eine oder die mehreren organischen Oberflächenadditive einen aliphatischen Kohlenwasserstoff, der von 10 bis 40 Kohlenstoffatome aufweist, oder einen aliphatischen funktionalisierten Kohlenwasserstoff, der von 10 bis 40 Kohlenstoffatome aufweist, enthalten, und wobei der funktionalisierte Kohlenwasserstoff eine oder mehrere funktionelle Gruppen aufweist, die aus Hydroxygruppen, Karbonsäureestergruppen, Ketongruppen, Sauerstoffethergruppen und Kombinationen davon ausgewählt sind.

4. Die Einbaumatte nach einem der vorstehenden Ansprüche, wobei das eine oder die mehreren organischen Oberflächenadditive einen Fettsäurealkohol, einen Fettsäureester oder eine Kombination davon enthalten.

5. Die Einbaumatte nach einem der vorstehenden Ansprüche, wobei das eine oder die mehreren organischen Oberflächenadditive ein Silikonöl enthalten.

6. Die Einbaumatte nach einem der vorstehenden Ansprüche, wobei die Matte kein organisches Oberflächenadditiv an ihrer Oberfläche, die der Oberfläche des Emissionsminderungselements ausgesetzt ist oder sein wird, enthält.

7. Die Einbaumatte nach einem der vorstehenden Ansprüche, die mindestens zu 95 Gew.-%, bezogen auf das Gesamtgewicht der Matte, Fasern enthält.

8. Die Einbaumatte nach einem der vorstehenden Ansprüche, wobei die polykristallinen Fasern mindestens zu 50 Gew.-% Al$_2$O$_3$, vorzugsweise mindestens zu 65 Gew.-% Al$_2$O$_3$, bezogen auf das Gewicht der Fasern, enthalten.

9. Die Einbaumatte nach einem der vorstehenden Ansprüche, aufweisend von zu 0,5 bis 35 Gew.-% SiO$_2$, bezogen auf das Gewicht der Matte.

10. Die Einbaumatte nach einem der vorstehenden Ansprüche, wobei die Matte kein oder weniger als zu 5 Gew.-% Vermiculit, Graphit oder eine Kombination davon enthält.

11. Eine Emissionsminderungsvorrichtung, die mindestens eine Einbaumatte nach einem der Ansprüche 1 bis 10 enthält.

12. Verfahren zum Anordnen einer Emissionsminderungsvorrichtung, aufweisend

(i) Bereitstellen einer Matte nach einem der Ansprüche 1 bis 10,

(ii) Wickeln der Matte um ein Emissionsminderungselement;

(iii) Einsetzen der Matte mit dem Emissionsminderungselement in ein Gehäuse, wobei das Gehäuse Teil einer Emissionsminderungsvorrichtung ist.

13. Verfahren zum Herstellen einer Matte nach einem der Ansprüche 1 bis 10, aufweisend

(i) Bereitstellen einer Einbaumatte, die nadelgelocht oder nähgewirkt ist und eine Dicke von 8,0 mm bis 15,0 mm, vorzugsweise von 8,8 mm bis 15,0 mm, mehr bevorzugt von 10,0 mm bis 15,0 mm und eine Rohdichte von 150 kg/m$^3$ bis 180 kg/m$^3$ aufweist und zu mindestens 75 Gew.-% polykristalline Fasern, vorzugsweise zu mindestens 85 Gew.-%, bezogen auf das Gewicht der Matte, enthält, und einen organischen Gesamtgehalt von weniger als 2,5 %, gemessen nach LOI, vorzugsweise von 0,5 % bis 2,1 %, aufweist, wobei die Matte eine Einbettungskraft (Fc), gemessen nach dem in dem Abschnitt "Einbettungskraft" der Beschreibung definierten Prüfverfahren, von mehr als 5700 N aufweist; und anschließend

(ii) Aufbringen eines oder mehrerer organischer Oberflächenadditive auf die Oberfläche der Matte, die dem Gehäuse der Emissionsminderungsvorrichtung ausgesetzt sein wird, wobei die organischen Oberflächenadditive in Mengen aufgebracht werden, derart, dass der Gesamtgehalt an organischen Oberflächenadditiven von zu 0,01 Gew.-% bis 0,44 Gew.-%, bezogen auf das Gewicht der Matte beträgt, wobei das organische Oberflächenadditiv wie in einem der Ansprüche 1 bis 5 definiert ist, und wobei, nach dem Aufbringen eines oder mehrerer organischer Oberflächenadditive auf die Oberfläche der Matte, die Matte eine Einbettungskraft (Fc), gemessen nach dem in dem Abschnitt "Einbettungskraft" der Beschreibung definierten Prüfverfahren, von weniger als 5700 N aufweist.

14. Das Verfahren nach Anspruch 13, wobei das organische Oberflächenadditiv durch Sprühen auf die Oberfläche aufgetragen wird.

## Revendications

1. Mat de montage pour le montage d'un élément antipollution dans un boîtier,

dans lequel le mat de montage est aiguilleté ou lié par couture et a une épaisseur allant de 8,0 mm à 15,0 mm, de préférence de 8,8 mm à 15,0 mm, plus préférentiellement de 10,0 mm à 15,0 mm et une densité apparente allant de 150 kg/m$^3$ à 180 kg/m$^3$ et contient au moins à 75 % en poids de fibres polycristallines, de préférence au moins 85 % en poids, sur la base du poids du mat,
dans lequel le mat a une teneur organique totale inférieure à 2,9 %, telle que mesurée par LOI, de préférence allant de 0,6 % à 2,6 %,
**caractérisé en ce que**
le mat contient à sa surface qui est ou qui sera exposée au boîtier un ou plusieurs additifs de surface organiques sélectionnés parmi des solides organiques ayant un point de fusion supérieur à 25 °C et inférieur à 70 °C et des huiles organiques ayant une viscosité cinématique à 40 °C entre 4 mm$^2$/s et 145 mm$^2$/s, de préférence entre 4,5 mm$^2$/s et 24 mm$^2$/s, telle que mesurée conformément à la norme ASTM D445, dans lequel la quantité totale du ou des additifs de surface organiques dans le mat est de 0,01 à 0,44 % en poids sur la base du poids du mat ;
**et en ce que**
le mat a une force de mise en boîte (Fc), telle que mesurée selon le procédé d'essai défini dans la section « Force de mise en boîte » de la description, inférieure à 5700 N.

2. Mat de montage selon la revendication 1, dans lequel le mat a une force de mise en boîte (Fc), telle que mesurée selon le procédé d'essai défini dans la section « Force de mise en boîte » de la description, inférieure à 4500 N, par exemple de 3000 à 4500 N.

3. Mat de montage selon l'une quelconque des revendications précédentes, dans lequel le ou les additifs de surface organiques comportent un hydrocarbure aliphatique ayant de 10 à 40 atomes de carbone ou un hydrocarbure fonctionnalisé aliphatique ayant de 10 à 40 atomes de carbone et dans lequel l'hydrocarbure fonctionnalisé a un ou plusieurs groupes fonctionnels sélectionnés parmi groupes hydroxy, groupes ester d'acide carboxylique, groupes cétone, groupes oxygène-éther et combinaisons de ceux-ci.

4. Mat de montage selon l'une quelconque des revendications précédentes, dans lequel le ou les additifs de surface organiques comportent un alcool d'acide gras, un ester d'acide gras ou une combinaison de ceux-ci.

5. Mat de montage selon l'une quelconque des revendications précédentes, dans lequel le ou les additifs de surface organiques comportent une huile de silicone.

6. Mat de montage selon l'une quelconque des revendications précédentes, dans lequel le mat ne contient aucun additif de surface organique à sa surface qui est ou sera exposée à la surface de l'élément antipollution.

7. Mat de montage selon l'une quelconque des revendications précédentes, contenant au moins 95 % en poids sur la base du poids total du mat de fibres.

8. Mat de montage selon l'une quelconque des revendications précédentes, dans lequel les fibres polycristallines contiennent au moins 50 % en poids d'$Al_2O_3$, de préférence au moins 65 % en poids d'$Al_2O_3$ sur la base du poids des fibres.

9. Mat de montage selon l'une quelconque des revendications précédentes comprenant de 0,5 % à 35 % en poids de $SiO_2$ sur la base du poids du mat.

10. Mat de montage selon l'une quelconque des revendications précédentes, dans lequel le mat ne contient aucun ou moins de 5 % en poids de vermiculite, graphite ou combinaison de ceux-ci.

11. Dispositif antipollution contenant au moins un mat de montage selon l'une quelconque des revendications 1 à 10.

12. Procédé pour l'assemblage d'un dispositif antipollution, comprenant

   (i) la fourniture d'un mat selon l'une quelconque des revendications 1 à 10,
   (ii) l'enroulement du mat autour d'un élément antipollution ;
   (iii) l'insertion du mat avec l'élément antipollution dans un boîtier dans lequel le boîtier fait partie d'un dispositif antipollution.

13. Procédé de fabrication d'un mat selon l'une quelconque des revendications 1 à 10, comprenant

   (i) la fourniture d'un mat de montage qui est aiguilleté ou lié par couture et a une épaisseur allant de 8,0 mm à 15,0 mm, de préférence de 8,8 mm à 15,0 mm, plus préférentiellement de 10,0 mm à 15,0 mm et une densité apparente allant de 150 kg/m$^3$ à 180 kg/m$^3$ et contient au moins 75 % en poids de fibres polycristallines, de préférence au moins 85 % en poids sur la base du poids du mat et a une teneur organique totale inférieure à 2,5 %, telle que mesurée par LOI, de préférence allant de 0,5 % à 2,1 %, dans lequel le mat a une force de mise en boîte (Fc), telle que mesurée selon le procédé d'essai défini dans la section « Force de mise en boîte » de la description, supérieure à 5700 N ; et par la suite
   (ii) l'application d'un ou de plusieurs additifs de surface organiques à la surface du mat qui sera exposée au boîtier du dispositif antipollution, dans lequel l'additif de surface organique est appliqué en quantités de telle sorte que la teneur totale en additif de surface organique est entre 0,01 % et 0,44 % en poids sur la base du poids du mat, dans lequel l'additif de surface organique est tel que défini dans l'une quelconque des revendications 1 à 5 et dans lequel, après ladite application d'un ou de plusieurs additifs de surface organiques à la surface du mat, le mat a une force de mise en boîte (Fc), telle que mesurée selon le procédé d'essai défini dans la section « Force de mise en boîte » de la description, inférieure à 5700 N.

14. Procédé selon la revendication 13, dans lequel l'additif de surface organique est appliqué à la surface par pulvérisation.

EP 3 763 922 B1

**Fig. 1**

*Fig. 2*

# Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008121801 A1
- EP 1832729 A1
- EP 2848720 B1
- EP 0374671 A
- EP 0374672 A
- EP 0386638 A
- EP 0386 A
- EP 636 A
- EP 535074 A
- EP 0532570 A